# EUROPÄISCHE PATENTSCHRIFT

(11) **EP 3 793 870 B1**
(45) Veröffentlichungstag und Bekanntmachung des Hinweises auf die Patenterteilung: **06.12.2023**
(21) Anmeldenummer: 18725175.6
(22) Anmeldetag: 14.05.2018
(51) Int. Cl.: B60S 3/04

(54) **FAHRZEUGWASCHANLAGE MIT EINER SPRÜHVORRICHTUNG**
CAR WASH SYSTEM WITH A SPRAYING DEVICE
SYSTEME DE LAVAGE DE VEHICULES AVEC UN DISPOSITIF DE PULVERISATION

(43) Veröffentlichungstag der Anmeldung: 24.03.2021
(73) Patentinhaber: Alfred Kärcher SE & Co. KG, 71364 Winnenden (DE)
(72) Erfinder: OPPENLÄNDER, Simon, 71364 Winnenden (DE); SPECKMAIER, André, 71543 Wüstenrot (DE)
(74) Vertreter: DTS Patent- und Rechtsanwälte Schnekenbühl und Partner mbB
(86) Internationale Anmeldenummer: PCT/EP2018/062405
(87) Internationale Veröffentlichungsnummer: WO 2019/219165

(56) Entgegenhaltungen:
- WO-A1-2013/013715
- DE-A1- 3 445 903
- US-A1- 2002 162 575
- US-A1- 2012 048 311

## Beschreibung

Die vorliegende Offenbarung betrifft eine Fahrzeugwaschanlage mit einer Sprühvorrichtung, umfassend eine erste Sprüheinheit, die eine Mehrzahl von Sprühdüsen umfasst oder bildet, über die ein zu reinigendes Fahrzeug mit einer ersten Reinigungsflüssigkeit beaufschlagbar ist, und eine zweite Sprüheinheit, die eine Mehrzahl von Sprühdüsen umfasst oder bildet, über die das Fahrzeug mit einer zweiten Reinigungsflüssigkeit beaufschlagbar ist.

Bei einer derartigen Waschanlage sind die Sprüheinheiten vorgesehen, um das Fahrzeug insbesondere vor der Reinigung mit unterschiedlichen Reinigungsflüssigkeiten zu beaufschlagen. Beispielsweise sind die Sprüheinheiten seitlich neben dem Fahrzeug positioniert, wobei das Fahrzeug zunächst über die erste Sprüheinheit mit der ersten Reinigungsflüssigkeit beaufschlagt wird, zum Beispiel unter Hochdruck stehendem Wasser, um Grobschmutz abzuwaschen und anhaftende Partikel anzulösen oder einzuweichen. Im Anschluss daran kann das Fahrzeug mit der zweiten Reinigungsflüssigkeit beaufschlagt werden, beispielsweise einem Gemisch aus Wasser und einer Reinigungschemikalie. Dies dient der Vorbereitung einer Abreinigung der Fahrzeugflächen mit einer Karosseriebürste, insbesondere einer Seitenwaschbürste.

In der DE 34 45 903 A1 ist eine Vorrichtung zum Reinigen von Kraftfahrzeugen mit Hochdruckwasser in einer Waschstraße beschrieben. Die Vorrichtung umfasst quer zur Förderrichtung sich erstreckende Düsenrohre, die an schwenkbar gelagerten Hebelarmpaaren befestigt sind. Um die Düsenrohre der Vorderseite bzw. der Rückseite eines Kraftfahrzeugs nachfahren zu können, sind die Düsenrohre am freien Ende des langen Hebelarms zweiarmiger Hebelpaare angeordnet, die über eine Verbindungsstange miteinander verbunden sind, deren Anlenkpunkte an einem Ende oberhalb und am anderen Ende unterhalb der Drehpunkte der Hebelarmpaare liegen.

Eine Fahrzeugwaschanlage mit Sprühvorrichtungen seitlich an einem Waschportal ist in der US 2002/0162575 A1 beschrieben.

Aufgabe der vorliegenden Erfindung ist es, eine Fahrzeugwaschanlage mit vielseitigerer Einsatzmöglichkeit im Hinblick auf ein verbessertes Reinigungsergebnis bereitzustellen.

Diese Aufgabe wird durch eine erfindungsgemäße Fahrzeugwaschanlage mit den Merkmalen von Anspruch 1 gelöst.

Bei der Sprühvorrichtung der erfindungsgemäßen Fahrzeugwaschanlage ist eine Verstelleinrichtung mit einer Antriebseinheit vorgesehen. Über die eine Antriebseinheit besteht die Möglichkeit, die erste Sprüheinheit von der ersten Stellung in die zweite Stellung zu überführen, und umgekehrt. Auf diese Weise wird die Ausrichtung der Sprühdüsen der ersten Sprüheinheit verändert und damit die Sprührichtung, in der die erste Reinigungsflüssigkeit versprüht wird. Über die Antriebseinheit kann in entsprechender Weise die zweite Sprüheinheit von der ersten Stellung in die zweite Stellung, und umgekehrt, überführt werden, wodurch sich die Ausrichtung der Sprühdüsen der zweiten Sprüheinheit und damit die Sprührichtung ändert, in der die zweite Reinigungsflüssigkeit versprüht wird. Durch Änderung der Ausrichtung der jeweiligen Sprühdüsen ist die Möglichkeit gegeben, die erste und die zweite Reinigungsflüssigkeit so auf das Fahrzeug auszurichten, dass zu reinigende Bereiche besser von der Reinigungsflüssigkeit erfasst werden, zum Beispiel bei der Beaufschlagung der Fahrzeugfront einerseits und des Fahrzeughecks andererseits, jedoch auch insbesondere in Bereichen von Anbauteilen, zum Beispiel Außenspiegeln. Die Sprüheinheiten sind über die Verstelleinrichtung miteinander gekoppelt, wobei zum jeweiligen Verstellen nur eine Antriebseinheit vorgesehen ist. Auf diese Weise können die Herstellungskosten für die Sprühvorrichtung gering gehalten sowie deren konstruktive Ausgestaltung einfach gehalten werden und vorzugsweise eine kompakte Bauform der Sprühvorrichtung erzielt werden. Die Sprüheinheiten können um voneinander unterschiedliche Schwenkachsen verschwenkt werden. Dies erhöht die Vielseitigkeit der Einsatzmöglichkeiten der Sprühvorrichtung an der Fahrzeugwaschanlage, insbesondere bei der nachfolgend erwähnten bevorzugt gegenläufigen Verschwenkung der Sprüheinheiten.

Bei der Fahrzeugwaschanlage sind die Sprüheinheiten seitlich neben dem Fahrzeug positioniert und dienen zur Beaufschlagung seitlicher Fahrzeugflächen, der Fahrzeugfront und des Fahrzeughecks, je nach Relativposition des Fahrzeugs und der Sprühvorrichtung. Die Schwenkachsen sind quer und insbesondere senkrecht zu einer Aufstellfläche für das Fahrzeug ausgerichtet, insbesondere vertikal.

Vorzugsweise umfasst die erste Sprüheinheit ein Sprührohr, an der die Sprühdüsen gebildet sind. Dies ermöglicht eine konstruktiv einfache Ausgestaltung der Sprühvorrichtung.

In entsprechender Weise ist es günstig, wenn die zweite Sprüheinheit ein Sprührohr umfasst, an der die Sprühdüsen gebildet sind.

Bevorzugt definiert das Sprührohr der ersten Sprüheinheit deren Schwenkachse.

Alternativ oder ergänzend ist es günstig, wenn das Sprührohr der zweiten Sprüheinheit deren Schwenkachse definiert.

Die erste Sprüheinheit und die zweite Sprüheinheit sind vorteilhafterweise seitlich nebeneinander positioniert.

Günstigerweise sind die erste Schwenkachse und die zweite Schwenkachse parallel zueinander ausgerichtet. Beispielsweise sind die vorstehend genannten Sprührohre der ersten Sprüheinheit und der zweiten Sprüheinheit seitlich nebeneinander angeordnet und parallel zueinander ausgerichtet.

Für einen vielseitigen Einsatz der Sprühvorrichtung ist es günstig, wenn die erste Sprüheinheit und die zweite Sprüheinheit mit unterschiedlichen Reinigungsflüssigkeiten beaufschlagbar sind, die über die Sprüheinheiten auf das Fahrzeug gesprüht werden können.

Die erste Reinigungsflüssigkeit ist bei einer vorteilhaften Ausführungsform unter Hochdruck stehendes Wasser. Alternativ oder ergänzend ist die zweite Reinigungsflüssigkeit bevorzugt ein Gemisch aus Wasser mit einer Reinigungschemikalie. Hierauf wurde bereits eingangs eingegangen. Entgegengesetztes ist ebenfalls möglich. Die erste Reinigungsflüssigkeit kann ein Gemisch aus Wasser mit einer Reinigungschemikalie sein, und/oder die zweite Reinigungsflüssigkeit unter Hochdruck stehendes Wasser.

Als vorteilhaft erweist es sich, wenn die erste Sprüheinheit und die zweite Sprüheinheit simultan verschwenkbar sind. Durch Betätigen der Antriebseinheit können auf diese Weise die erste Sprüheinheit und die zweite Sprüheinheit gleichzeitig von der jeweiligen ersten in die jeweilige zweite Stellung überführt werden, und umgekehrt. Dies ermöglicht einen vielseitigen Einsatz der Sprühvorrichtung zum Beispiel für ein Reinigungsprogramm, bei dem das Fahrzeug gleichzeitig mit der ersten und der zweiten Reinigungsflüssigkeit beaufschlagt wird.

Von Vorteil ist es, wenn die erste Sprüheinheit und die zweite Sprüheinheit gegenläufig zueinander verschwenkbar sind. Die Schwenkrichtung der ersten Sprüheinheit und die Schwenkrichtung der zweiten Sprüheinheit sind einander entgegengesetzt, bezüglich der jeweiligen Schwenkachse.

Bei einer bevorzugten Ausführungsform ist es günstig, wenn ein Schwenkwinkel beim Verschwenken der ersten Sprüheinheit und ein Schwenkwinkel beim Verschwenken der zweiten Sprüheinheit den gleichen oder im Wesentlichen gleichen Betrag aufweisen. Beim Verschwenken von der ersten in die zweite Stellung und umgekehrt überstreichen die Sprüheinheiten betragsmäßig den gleichen oder im Wesentlichen gleichen Schwenkwinkel.

Die Ausrichtung der Sprühdüsen in der ersten Stellung und/oder in der zweiten Stellung ist vorteilhafterweise unterschiedlich. Nehmen die erste und die zweite Sprüheinheit jeweils die erste Stellung ein, sind die Sprührichtungen, unter denen die erste bzw. zweite Reinigungsflüssigkeit abgegeben wird, vorteilhafterweise voneinander unterschiedlich. In entsprechender Weise können die Sprührichtungen der ersten bzw. zweiten Reinigungsflüssigkeit in der jeweiligen zweiten Stellung voneinander unterschiedlich sein.

Bei der erfindungsgemäßen Fahrzeugwaschanlage ist es günstig, dass bei Einnahme der ersten Stellung durch die Sprüheinheiten aus den Sprühdüsen austretende Ströme von Reinigungsflüssigkeit voneinander weg gewandt sind und dabei insbesondere einen spitzen Winkel einschließen. In Draufsicht auf die Sprüheinheiten, axial bezüglich der Schwenkachsen, sind die Ströme der ersten und zweiten Reinigungsflüssigkeit beispielsweise V-förmig zueinander ausgerichtet.

In entsprechender Weise ist es von Vorteil, wenn bei Einnahme der zweiten Stellung durch die Sprüheinheiten aus den Sprühdüsen austretende Ströme von Reinigungsflüssigkeit einander überkreuzen. In Draufsicht auf die Sprüheinheiten, axial bezogen auf die Schwenkachsen, sind die Ströme der Reinigungsflüssigkeiten beispielsweise X-förmig zueinander ausgerichtet.

Bei andersartigen Ausführungsformen der Sprühvorrichtung kann vorgesehen sein, dass in der jeweiligen ersten Stellung die austretenden Ströme von Reinigungsflüssigkeit einander überkreuzen und/oder in der jeweiligen zweiten Stellung die austretenden Ströme von Reinigungsflüssigkeit voneinander weg gewandt sind und insbesondere einen spitzen Winkel einschließen.

Die Sprühvorrichtung umfasst vorzugsweise der jeweiligen Sprüheinheit zugeordnet eine Zufuhrleitung und ein Pumpaggregat zum Zuführen der ersten Reinigungsflüssigkeit oder zweiten Reinigungsflüssigkeit, wobei die Pumpaggregate von einer Steuereinrichtung wahlweise aktivierbar oder deaktivierbar sind. Über die Steuereinrichtung, die zum Beispiel eine Steuereinrichtung der Fahrzeugwaschanlage sein kann, kann das jeweilige Pumpaggregat angesteuert werden. Dies gibt die Möglichkeit einzustellen, welche der Sprüheinheiten Reinigungsflüssigkeit versprüht. Insbesondere kann vorgesehen sein, dass nur eine Sprüheinheit Reinigungsflüssigkeit versprüht, nicht aber die andere Sprüheinheit, oder dass Reinigungsflüssigkeit von beiden Sprüheinheiten gleichzeitig versprüht wird.

Der bedarfsgerechten Aktivierung oder Deaktivierung der Pumpaggregate steht es vorliegend vorteilhafterweise gleich, wenn in die jeweilige Zufuhrleitung ein von der Steuereinheit ansteuerbares Ventil zum wahlweisen Freigeben oder Sperren der Zufuhrleitung geschaltet ist.

Die Antriebseinheit kann beispielsweise pneumatisch, hydraulisch, elektrisch und/oder elektromagnetisch ausgestaltet sein. Bei einer bevorzugten Ausführungsform hat sich eine pneumatische Antriebseinheit als besonders vorteilhaft erwiesen. Die Antriebseinheit oder eine Betätigungseinrichtung für diese ist vorzugsweise von der vorstehend genannten Steuereinrichtung ansteuerbar.

Günstig ist es, wenn die Antriebseinheit einen Linearantrieb umfasst oder bildet, insbesondere ein Kolben-Zylinder-Aggregat, und wenn die Bewegung des Lineartriebs über eine Gelenkanordnung der Verstelleinrichtung in die Schwenkbewegungen der Sprüheinheiten umgesetzt wird. Es zeigt sich, dass dadurch eine zuverlässige Funktion der Verstelleinrichtung erzielt werden kann. Die lineare Bewegung der Antriebseinheit beeinflusst die Gelenkanordnung, mit der die Sprüheinheiten verschwenkt werden.

Für eine konstruktiv einfache Ausgestaltung und zuverlässige Funktion der Verstelleinrichtung ist es günstig, wenn die Sprüheinheiten über die Verstelleinrichtung mechanisch mit der Antriebseinheit gekoppelt sind.

Bei einer bevorzugten Ausführungsform ist es günstig, wenn die Verstelleinrichtung mindestens ein Gelenkglied umfasst, das mit einer Sprüheinheit gekoppelt ist und an der die Antriebseinrichtung direkt oder indirekt angreift. Das Gelenkglied ist insbesondere so mit der Sprüheinheit, beispielsweise einem Sprührohr, verbunden, dass eine Bewegung des Gelenkgliedes zur Verschwenkung der Sprüheinheit führt. Das Gelenkglied bildet insbesondere einen Hebel zum Verschwenken der Sprüheinheit aus. Der Hebel wird zum Beispiel infolge einer linearen Bewegung der Antriebseinheit bewegt und dadurch die Sprüheinheit verschwenkt.

Günstigerweise ist ein jeweiliges Gelenkglied für die erste Sprüheinheit und die zweite Sprüheinheit vorgesehen.

Als vorteilhaft erweist es sich, wenn die Verstelleinrichtung der ersten Sprüheinheit und der zweiten Sprüheinheit zugeordnet jeweils eine Gelenkanordnung umfasst, wobei Gelenkglieder beider Gelenkanordnungen miteinander vorzugsweise mechanisch in Eingriff stehen und die Antriebseinheit an einem der Gelenkglieder angreift. Über den bestehenden Eingriff können beide Sprüheinheiten simultan zueinander verschwenkt werden, mit nur einer Antriebseinheit. Die Gelenkanordnungen sind vorzugsweise symmetrisch oder im Wesentlichen symmetrisch relativ zueinander gebildet, wobei eine gegenläufige Verschwenkung der Sprüheinheiten erfolgen kann.

Die Gelenkglieder der Gelenkanordnungen stehen beispielsweise durch Eingriffselemente in Eingriff, die beispielsweise eine Verzahnung bilden.

Bei einer bevorzugten Ausführungsform der Sprühvorrichtung sind die Gelenkanordnungen als Gelenkparallelogramme ausgebildet.

Die Gelenkanordnungen definieren zum Erzielen einer kompakten Bauform bevorzugt eine gemeinsame Ebene, in der günstigerweise die Antriebseinheit angeordnet sein kann. Die gemeinsame Ebene ist vorzugsweise quer zu einer Erstreckungsrichtung der ersten Sprüheinheit und/oder der zweiten Sprüheinheit ausgebildet und insbesondere quer zu den Schwenkachsen.

Die Verstelleinrichtung umfasst oder bildet bevorzugt ein Halteelement zum Festlegen der Gelenkanordnungen an einer Trageinrichtung der Fahrzeugwaschanlage. Dies gibt die Möglichkeit, die Verstelleinrichtung als vormontierte Baueinheit bereitzustellen und an der Trageinrichtung zu montieren, beispielsweise einer Portalsäule einer Portalwaschanlage.

Günstig ist es, wenn der Sprühvorrichtung ein Abdeckelement zugeordnet ist, das die Sprüheinheiten an einer dem Fahrzeug zugewandten Seite überdeckt und Durchgangsöffnungen für die von den Sprühdüsen abgegebene Reinigungsflüssigkeit aufweist. Mittels des Abdeckelementes können die Sprüheinheiten geschützt werden. Vorzugsweise kann einer die Sprühvorrichtung aufweisenden Fahrzeugwaschanlage ein gefälligeres Aussehen verliehen werden.

Von Vorteil ist es, wenn der Sprühvorrichtung ein Abdeckelement zugeordnet ist, das die Antriebseinheit relativ zu den Sprüheinheiten überdeckt, wobei Komponenten der Verstelleinrichtung das Abdeckelement durchgreifen. Dies ermöglicht einen Schutz von Komponenten der Sprühvorrichtung, insbesondere der Antriebseinheit auf der den Sprüheinheiten abgewandten Seite des Abdeckelementes. Beispielsweise durchgreifen Komponenten der vorstehend genannten Gelenkanordnungen das Abdeckelement.

Bevorzugt umfasst die Sprühvorrichtung eine Lagereinrichtung zur schwenkbaren Lagerung der ersten Sprüheinheit und der zweiten Sprüheinheit an einer Trageinrichtung der Fahrzeugwaschanlage. Die Lagereinrichtung stellt insbesondere ein Schwenklager bereit und ermöglicht dadurch eine zuverlässige Funktion der Sprühvorrichtung.

Die Lagereinrichtung umfasst beispielsweise eine Lagerbuchse, die von einem Sprührohr der ersten Sprüheinheit und/oder der zweiten Sprüheinheit durchgriffen wird.

Die Lagereinrichtung umfasst alternativ oder ergänzend bevorzugt mindestens eine Lagerhülse, in die ein Sprührohr der ersten oder zweiten Sprüheinheit mit einem Endabschnitt eingreift. Beispielsweise steht das Sprührohr auf einem Boden der Lagerhülse auf.

Die Vorteile, die bereits im Zusammenhang mit der Erläuterung der offenbarten Sprühvorrichtung erwähnt wurden, können bei der Fahrzeugwaschanlage ebenfalls erzielt werden. Diesbezüglich kann auf die voranstehenden Ausführungen verwiesen werden.

Vorteilhafte Ausführungsformen der erfindungsgemäßen Fahrzeugwaschanlage ergeben sich durch vorteilhafte Ausführungsformen der offenbarten Sprühvorrichtung. Auch diesbezüglich kann auf die voranstehenden Ausführungen verwiesen werden.

Es kann vorgesehen sein, dass die Fahrzeugwaschanlage eine Portalwaschanlage ist. Diese kann ein relativ zu einem Fahrzeug bewegbares Waschportal mit einer die Trageinrichtung umfassenden oder bildenden Portalsäule umfassen. Durch Bewegung der Portalsäule mit der daran angeordneten Sprühvorrichtung besteht die Möglichkeit, das Fahrzeug bevorzugt über dessen gesamte Länge mit der erste Reinigungsflüssigkeit und der zweiten Reinigungsflüssigkeit zu beaufschlagen. Durch Verschwenken der Sprüheinheiten können die erste und die zweite Reinigungsflüssigkeit gezielt auf die Fahrzeugoberfläche ausgerichtet werden.

Die erfindungsgemäße Fahrzeugwaschanlage kann eine Waschstraße sein mit einer Fördereinrichtung zum Transportieren des Fahrzeugs, wobei die Trageinrichtung seitlich neben dem Fahrzeug positioniert ist. Das Fahrzeug kann mittels der Fördereinrichtung an der Sprühvorrichtung vorbei transportiert und währenddessen über die Sprüheinheiten mit der Reinigungsflüssigkeit beaufschlagt werden. Durch deren Schwenkbewegung kann die Reinigungsflüssigkeit gezielt auf die Fahrzeugflächen ausgerichtet werden.

Mit der erfindungsgemäßen Fahrzeugwaschanlage ist vorzugsweise ein Reinigungsprogramm mit folgenden Schritten ausführbar:
- das Fahrzeug und die Sprühvorrichtung werden relativ zueinander in Längsrichtung des Fahrzeugs bewegt;
- ausgehend von einem ersten Fahrzeugende nimmt die erste Sprüheinheit dabei die erste Stellung ein, und von den Sprühdüsen der ersten Sprüheinheit wird die erste Reinigungsflüssigkeit versprüht;
- im Bereich zwischen dem ersten Fahrzeugende und dem zweiten Fahrzeugende, vorzugsweise im Bereich der Fahrzeugmitte, wird die erste Sprüheinheit über die Verstelleinrichtung in die zweite Stellung überführt;
- das Fahrzeug und die Sprühvorrichtung werden in Längsrichtung des Fahrzeugs zueinander bewegt, bis die Sprühvorrichtung im Bereich des zweiten Fahrzeugendes angeordnet ist,
wobei die Sprühdüsen der zweiten Sprüheinheit währenddessen nicht mit der zweiten Reinigungsflüssigkeit beaufschlagt sind. Bei vorstehend genannten Schritten des Reinigungsprogramms wird das Fahrzeug über die erste Reinigungsflüssigkeit beaufschlagt, wobei ein Wechsel der ersten Sprüheinheit von der ersten in die zweite Stellung vorzugsweise ungefähr im Bereich der Fahrzeugmitte erfolgt.

Das Reinigungsprogramm wird anschließend vorzugsweise derart durchgeführt:
- ausgehend vom zweiten Fahrzeugende nimmt die zweite Sprüheinheit die erste Stellung ein, und von den Sprühdüsen der zweiten Sprüheinheit wird die zweite Reinigungsflüssigkeit versprüht;
- im Bereich zwischen dem zweiten Fahrzeugende und dem ersten Fahrzeugende, insbesondere im Bereich der Fahrzeugmitte, wird die zweite Sprüheinheit über die Verstelleinrichtung in die zweite Stellung überführt;
- das Fahrzeug und die Sprühvorrichtung werden in Längsrichtung des Fahrzeugs relativ zueinander bewegt, bis die Sprühvorrichtung im Bereich des ersten Fahrzeugendes angeordnet ist,
wobei die Sprühdüsen der ersten Sprüheinheit währenddessen nicht mit der ersten Reinigungsflüssigkeit beaufschlagt sind. Bei den zuletzt genannten Schritten des Reinigungsprogramms wird das Fahrzeug über die Sprühdüsen der zweiten Sprüheinheit mit der zweiten Reinigungsflüssigkeit beaufschlagt. Vorzugsweise im Bereich ungefähr der Mitte des Fahrzeugs wird die zweite Sprüheinheit von der ersten Stellung in die zweite Stellung überführt. Günstig ist es, wenn die Sprührichtung erster Reinigungsflüssigkeit der Sprühdüsen der ersten Sprüheinheit und die Sprührichtung zweiter Reinigungsflüssigkeit der Sprühdüsen der zweiten Sprüheinheit in der ersten Stellung eine Richtungskomponente in der Bewegungsrichtung aufweist und in der zweiten Stellung eine Richtungskomponente entgegen der Bewegungsrichtung. Dies führt zu einem besseren Reinigungsergebnis.

Mit der erfindungsgemäßen Fahrzeugwaschanlage ist ein Reinigungsprogramm ausführbar, das folgendermaßen abläuft:
- das Fahrzeug und die Sprühvorrichtung werden in Längsrichtung des Fahrzeugs zueinander bewegt;
- ausgehend von einem ersten Fahrzeugende nehmen die erste Sprüheinheit und die zweite Sprüheinheit jeweils die erste Stellung ein, von den Sprühdüsen der ersten Sprüheinheit wird die erste Reinigungsflüssigkeit versprüht und von den Sprühdüsen der zweiten Sprüheinheit die zweite Reinigungsflüssigkeit versprüht, bis die Sprühvorrichtung im Bereich des zweiten Fahrzeugendes angeordnet ist,
wobei das Fahrzeug bei der Relativbewegung zunächst mit der ersten Reinigungsflüssigkeit und anschließend mit der zweiten Reinigungsflüssigkeit beaufschlagt wird. Bei einer Relativbewegung des Fahrzeugs und der Sprühvorrichtung zueinander wird das Fahrzeug zunächst mit der ersten Reinigungsflüssigkeit und unmittelbar anschließend mit der zweiten Reinigungsflüssigkeit beaufschlagt. Auf diese Weise kann ein Schnellreinigungsprogramm durchgeführt werden.

Die nachfolgende Beschreibung bevorzugter Ausführungsformen der Erfindung dient im Zusammenhang mit der Zeichnung der näheren Erläuterung der Erfindung. Es zeigen:
- Figur 1:: eine schematische Draufsicht auf eine erfindungsgemäße Fahrzeugwaschanlage, ausgestaltet als Portalwaschanlage, mit zwei Sprühvorrichtungen;
- Figur 2:: eine Portalsäule der Fahrzeugwaschanlage aus Figur 1, teilweise in Schnittdarstellung und schematisch gezeigt, wobei eine bevorzugte Ausführungsform der Sprühvorrichtung gezeigt ist;
- Figur 3:: eine vergrößerte Darstellung der Sprühvorrichtung aus Figur 2 in einer Draufsicht, wobei die Sprüheinheiten der Sprühvorrichtung jeweils eine erste Stellung einnehmen;
- Figur 4:: eine Darstellung entsprechend Figur 3, wobei die Sprüheinheiten jeweils eine zweite Stellung einnehmen;

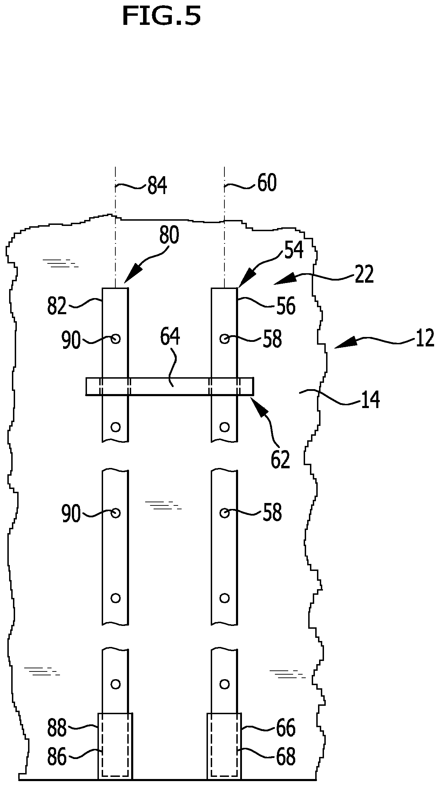

- Figur 5:: eine Ansicht in Blickrichtung des Pfeiles "5" in Figur 2 in einer schematischen Darstellung;
- Figuren 6 bis 9:: den Ablauf eines Reinigungsprogramms mit der Portalwaschanlage aus Figur 1 zu vier aufeinander folgenden Verfahrensschritten; und
- Figuren 10 und 11:: den Ablauf eines andersartigen Reinigungsprogramms mit der Portalwaschanlage aus Figur 1 zu zwei aufeinander folgenden Verfahrensschritten.

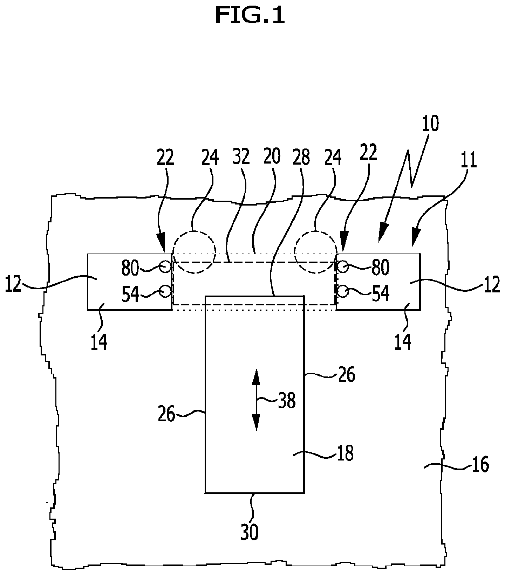

Figur 1 zeigt in schematischer Darstellung eine mit dem Bezugszeichen 10 belegte vorteilhafte Ausführungsform einer erfindungsgemäßen Fahrzeugwaschanlage. Die Fahrzeugwaschanlage 10 ist im vorliegenden Fall als Portalwaschanlage ausgestaltet. Die Portalwaschanlage umfasst zwei im Abstand zueinander angeordnete Trageinrichtungen 12, ausgestaltet als Portalsäulen 14. Die Portalsäulen 14 sind quer und insbesondere senkrecht zu einer Aufstellfläche 16 für ein zu reinigendes Fahrzeug 18 ausgerichtet. Die Aufstellfläche 16 kann beispielsweise als horizontal ausgerichtet angenommen werden, so dass die Portalsäulen 14 im Wesentlichen vertikal ausgerichtet sind.

Das Waschportal 11 umfasst eine die Portalsäulen 14 miteinander verbindende Traverse 20, die oberhalb des Fahrzeugs 18 angeordnet ist.

Zum Abreinigen des Fahrzeugs 18 umfasst die Fahrzeugwaschanlage 10 an jeder Trageinrichtung 12 eine bevorzugte Ausführungsform einer Sprühvorrichtung 22, auf die nachfolgend eingegangen wird.

Darüber hinaus umfasst die Fahrzeugwaschanlage 10 an jeder Portalsäule 14 eine Seitenwaschbürste 24. Über die Seitenwaschbürsten 24 können Fahrzeugseitenflächen 26 sowie vorzugsweise die Fahrzeugfront 28 und/oder das Fahrzeugheck 30 abgereinigt werden. Darüber hinaus ist eine Karosseriebürste in Gestalt einer "Dachbürste" 32 vorgesehen, mit der oben liegende Fahrzeugbereiche abgereinigt werden können, insbesondere das Dach des Fahrzeugs 18.

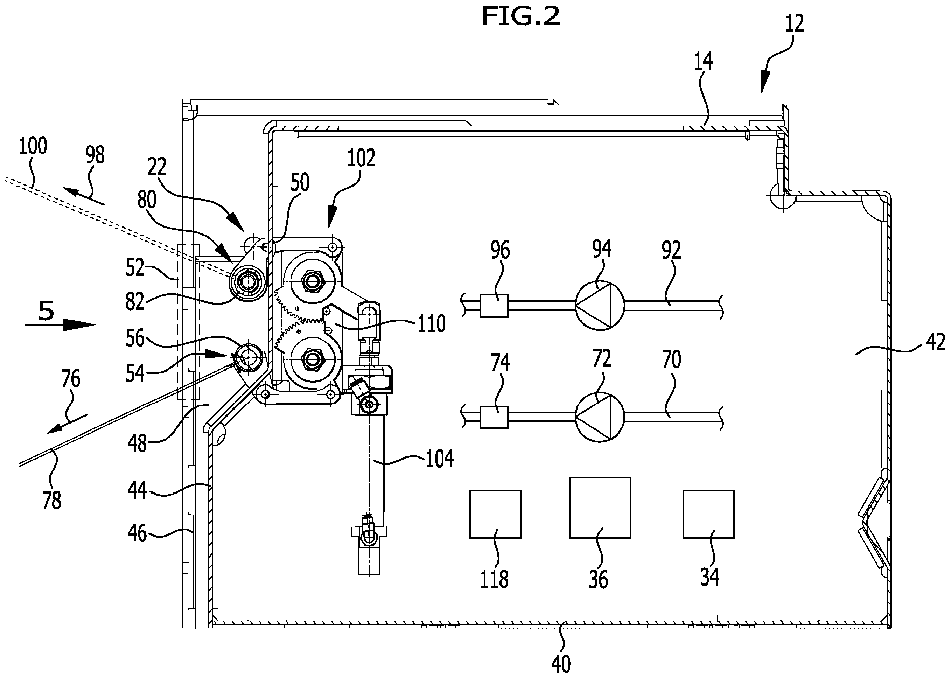

Mittels einer in Figur 2 schematisch dargestellten Antriebseinrichtung 34, die von einer Steuereinrichtung 36 ansteuerbar ist, kann das Waschportal 11 in an sich bekannter Weise relativ zum Fahrzeug 18 bewegt werden. Dabei wird davon ausgegangen, dass die Bewegung in Längsrichtung des Fahrzeugs 18 erfolgt, gekennzeichnet durch einen Doppelpfeil 38 in Figur 1. Es wird angenommen, dass das Fahrzeug 18 relativ zur Fahrzeugwaschanlage 10 korrekt positioniert ist.

Nachfolgend wird unter Verweis insbesondere auf die Figuren 2 bis 4 auf die Konstruktion der Sprühvorrichtung 22 sowie deren Anordnung an einer Portalsäule 14 eingegangen. Es versteht sich, dass die Konstruktion der Sprühvorrichtung 22 bei der anderen Portalsäule 14 in funktioneller Hinsicht identisch ist, jedoch spiegelbildlich bezüglich einer Längsmittenebene der Fahrzeugwaschanlage 10. Entsprechendes gilt für die Anordnung der Sprühvorrichtung 22 der anderen Portalsäule.

Im vorliegenden Fall bildet die Portalsäule 14 ein ungefähr quaderförmiges Gehäuse 40 aus, das einen Innenraum 42 bildet. Das Gehäuse 40 weist auf einer dem Fahrzeug 18 zugewandten Seite ein Abdeckelement 44 auf. Das Abdeckelement 44 überdeckt den Innenraum 42 auf der dem Fahrzeug 18 zugewandten Seite zumindest abschnittsweise.

Darüber hinaus weist die Portalsäule 14 ein Abdeckelement 46 auf. Das Abdeckelement 46 überdeckt das Gehäuse 40 und insbesondere dessen Abdeckelement 44 zumindest abschnittsweise auf der dem Fahrzeug 18 zugewandten Seite. Zwischen den Abdeckelementen 44 und 46 ist ein Zwischenraum 48 angeordnet.

Das Abdeckelement 44 weist mindestens eine Durchgangsöffnung 50 auf, diese ist bei der Darstellung gemäß Figur 2 unterhalb der Zeichenebene im Abdeckelement 44 gebildet.

Im Abdeckelement 46 ist eine Mehrzahl von Durchgangsöffnungen 52 gebildet, Figur 2 zeigt mit gestrichelter Kontur ungefähr die Position einer jeweiligen Durchgangsöffnung. Die Durchgangsöffnungen 52 sind auf Höhe der nachfolgend erwähnten Sprühdüsen der Sprühvorrichtung 22 am Abdeckelement 46 gebildet.

Die Sprühvorrichtung 22 umfasst eine erste Sprüheinheit 54. Die erste Sprüheinheit 54 weist ein erstes Sprührohr 56 auf, an dem eine Mehrzahl von Sprühdüsen 58 gebildet ist.

Das Sprührohr 56 ist im Zwischenraum 48 angeordnet und in Höhenrichtung der Portalsäule 14 ausgerichtet. Eine vom Sprührohr 56 definierte Achse, nachfolgend Schwenkachse 60, ist insbesondere senkrecht zur Aufstellfläche 16 ausgerichtet.

Das Sprührohr 56 ist an der Portalsäule 14, beispielsweise dem Abdeckelement 44, mittels einer Lagereinrichtung 62 um die Schwenkachse 60 schwenkbar gelagert. Die Lagereinrichtung 62 umfasst zum Beispiel eine Lagerbuchse 64, die vom Sprührohr 56 durchgriffen ist und ein Schwenklager für dieses bildet.

Ferner kann die Lagereinrichtung 62 zum Beispiel eine Lagerhülse 66 aufweisen. Das Sprührohr 56 greift zum Beispiel mit einem Endabschnitt 68 in die Lagerhülse 66 ein und steht auf deren Boden auf.

Der ersten Sprüheinheit 54 zugeordnet umfasst die Fahrzeugwaschanlage 10 eine Zufuhrleitung 70 zum Zuführen einer ersten Reinigungsflüssigkeit. In die Zufuhrleitung 70 ist ein Pumpaggregat 72 geschaltet, das mit der Steuereinrichtung 36 in Wirkverbindung steht. Die Steuereinrichtung 36 kann das Pumpaggregat 72 wahlweise aktivieren oder deaktivieren, um das Sprührohr 56 mit der ersten Reinigungsflüssigkeit zu beaufschlagen.

Alternativ oder ergänzend kann in die Zufuhrleitung 70 ein mit der Steuereinrichtung 36 in Wirkverbindung stehendes Ventilelement 74 vorhanden sein. Unter Ansteuerung durch die Steuereinrichtung 36 kann das Ventilelement 74 die Zufuhrleitung 70 wahlweise freigeben oder sperren.

Wird das Sprührohr 56 mit Reinigungsflüssigkeit beaufschlagt, kann diese über die Sprühdüsen 58 abgegeben und auf das Fahrzeug 18 gesprüht werden. Je nachdem, welche Schwenkstellung das Sprührohr 56 in Bezug auf die Schwenkachse 60 einnimmt, wird die erste Reinigungsflüssigkeit vom Sprührohr 56 in einer unterschiedlichen Richtung versprüht. Ein Pfeil 76 zeichnet die Sprührichtung, die durchgezogene Doppellinie mit Bezugszeichen 78 den Sprühstrahl.

Die Sprühdüsen 58 sind beispielsweise äquidistant am Sprührohr 56 angeordnet und zum Beispiel als Flachstrahldüsen ausgestaltet, um einen im Wesentlichen vertikalen Sprühvorhang mit der ersten Reinigungsflüssigkeit bereitzustellen.

Die erste Reinigungsflüssigkeit ist insbesondere unter Hochdruck stehendes Wasser.

In entsprechender Weise wie die erste Sprüheinheit 54 umfasst die Sprühvorrichtung 22 eine zweite Sprüheinheit 80, die ein zweites Sprührohr 82 umfasst. Das Sprührohr 82 ist parallel zum Sprührohr 56 ausgerichtet, eine vom Sprührohr 82 definierte Achse, nachfolgend Schwenkachse 84, verläuft parallel zur Schwenkachse 60. Die Sprührohre 56 und 82 sind seitlich nebeneinander positioniert, wobei auch das Sprührohr 82 im Zwischenraum 48 angeordnet ist.

Das Sprührohr 82 ist vorzugsweise ebenfalls mittels der Lagereinrichtung 62 schwenkbar an der Portalsäule 14 gelagert. Es kann insbesondere vorgesehen sein, dass die Lagerbuchse 64 auch zur Lagerung des Sprührohrs 82 dient. Für einen Endabschnitt 88 des Sprührohrs 82 weist die Lagereinrichtung 62 eine zur Lagerhülse 66 korrespondierende Lagerhülse 88 auf, auf deren Boden das Sprührohr 82 aufstehen kann.

Am Sprührohr 82 sind Sprühdüsen 90 gebildet, die beispielsweise ebenfalls äquidistant zueinander angeordnet sind und ebenfalls als Flachstrahldüsen ausgestaltet sein können.

Vom Sprührohr 82 kann eine zweite Reinigungsflüssigkeit versprüht werden, die über eine der zweiten Sprüheinheit 80 zugeordnete Zufuhrleitung 92 zugeführt werden kann. In die Zufuhrleitung 92 kann ein Pumpaggregat 94 sowie alternativ oder ergänzend ein Ventilelement 96 geschaltet sein. Das Pumpaggregat 94 und die Ventilelement 96 können mit der Steuereinrichtung 36 in Wirkverbindung stehen. Abhängig von der Ansteuerung durch die Steuereinrichtung 36 kann das Sprührohr 82 mit der zweiten Reinigungsflüssigkeit beaufschlagt werden, wie dies vorstehend am Beispiel der ersten Sprüheinheit 54 bereits erläutert wurde.

Die vom Sprührohr 82 versprühte zweite Reinigungsflüssigkeit kann beispielsweise ein Gemisch aus Wasser und einer Reinigungschemikalie sein. Die Beimischung der Reinigungschemikalie kann zum Beispiel dem Pumpaggregat 94 vorgelagert stattfinden. Denkbar ist die Injektion über einen Injektor in die Zufuhrleitung 92.

Ein Pfeil 98 kennzeichnet die Sprührichtung der zweiten Reinigungsflüssigkeit, die von den Sprühdüsen 90 versprüht wird. Eine gestrichelte Doppellinie 100 symbolisiert den Sprühstrahl.

Die Sprühstrahlen 78, 100 sind durch die Durchgangsöffnungen 52 des Abdeckelementes 46 hindurch gerichtet. Das Abdeckelement 46 überdeckt die Sprüheinheiten 54, 80 auf der dem Fahrzeug 18 zugewandten Seite, so dass die Sprühvorrichtung 22 geschützt ist.

Es besteht insbesondere die Möglichkeit, beide Sprüheinheiten 54 und 80 gleichzeitig mit Reinigungsflüssigkeit zu beaufschlagen. Alternativ oder ergänzend kann vorgesehen sein, dass nur die erste Sprüheinheit 54 mit der ersten Reinigungsflüssigkeit beaufschlagt ist oder nur die zweite Sprüheinheit 80 mit der zweiten Reinigungsflüssigkeit.

Zum Verschwenken der Sprührohre 56, 82 und damit zum Ändern der Sprührichtungen 76, 98 abhängig von der jeweiligen Stellung der Sprührohre 56 und 82, umfasst die Sprühvorrichtung 22 eine Verstelleinrichtung 102. Über die Verstelleinrichtung 102 können die Sprührohre 56 und 82 simultan, gegenläufig zueinander und, hinsichtlich des Betrages, um einen gleichen Schwenkwinkel verschwenkt werden.

Zu diesem Zweck umfasst die Verstelleinrichtung 102 eine Antriebseinheit 104, die mechanisch mit den Sprührohren 56 und 82 gekoppelt ist. Hierzu umfasst die Verstelleinrichtung 102 eine der ersten Sprüheinheit 54 zugeordnete Gelenkanordnung 106 sowie eine der zweiten Sprüheinheit 80 zugeordnete Gelenkanordnung 108. Zum Festlegen der Gelenkanordnungen 106, 108 sowie der Antriebseinheit 104 an der Portalsäule 14 umfasst die Verstelleinrichtung 102 ein Halteelement 110. Das Halteelement 110 ist mit dem Abdeckelement 44 verbunden, zum Beispiel durch Kraft- und/oder Formschluss, etwa durch Verschraubung.

Die Antriebseinheit 104 ist vorliegend pneumatisch ausgestaltet und umfasst insbesondere ein Kolben-Zylinder-Aggregat 112. Dieses weist einen Zylinder 114 und einen relativ zum Zylinder 114 beweglichen Kolben 116 auf.

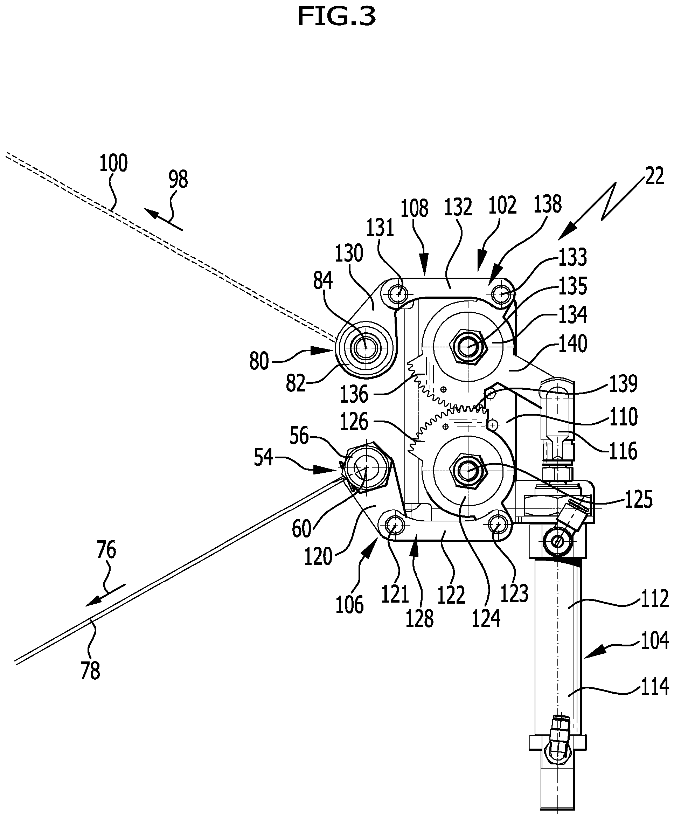

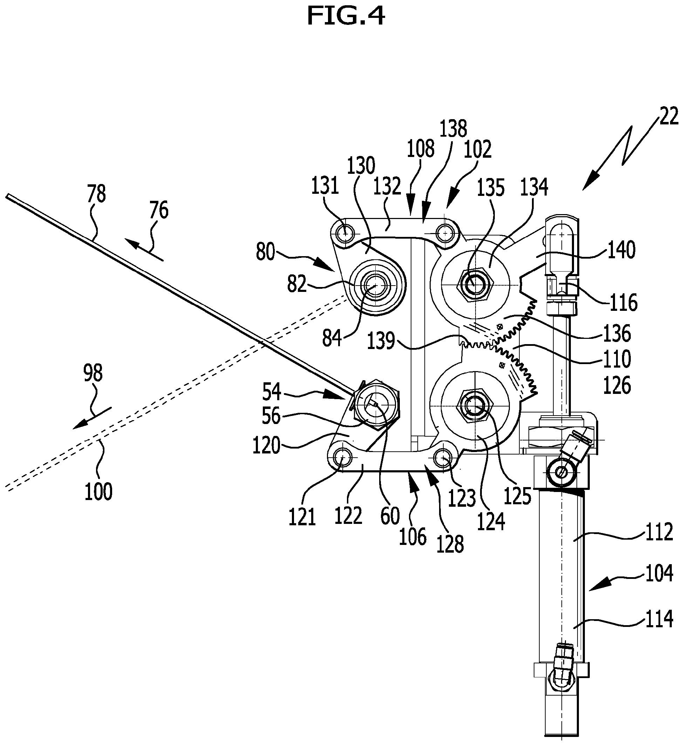

Die Steuereinrichtung 36 steht mit einer Betätigungseinrichtung 118 für das Kolben-Zylinder-Aggregat 112 in Wirkverbindung. Dies gibt die Möglichkeit, über die Steuereinrichtung 36 den Kolben 116 wahlweise von einer ersten Stellung (Figuren 2 und 3) in eine zweite Stellung (Figur 4) und umgekehrt zu überführen. In der ersten Stellung ist der Kolben 116 beispielsweise so weit wie möglich in den Zylinder 114 eingefahren, und in der zweiten Stellung ist der Kolben 116 beispielsweise so weit wie möglich aus dem Zylinder 114 ausgefahren.

Es versteht sich, das die Betätigungseinrichtung 118, dies ist in der Zeichnung nicht dargestellt, ein Aggregat zum Bereitstellen von Druckgas für das Kolben-Zylinder-Aggregat 112 aufweist sowie mindestens eine Zufuhrleitung zum Bereitstellen des Druckgases. Es kann mindestens ein Ventilelement vorgesehen sein, das unter Ansteuerung durch die Steuereinrichtung 36 die Zufuhrleitung(en) wahlweise freigeben oder sperren kann.

Insgesamt besteht infolgedessen die Möglichkeit, die Antriebseinheit 104 über die Steuereinrichtung 36 zu betätigen.

Die Gelenkanordnung 106 umfasst ein mit dem Sprührohr 56 schwenkfest verbundenes Gelenkglied 120, das über ein Gelenk 121 mit einem weiteren Gelenkglied 122 verbunden ist. Das Gelenkglied 122 ist an einem Gelenk 123 mit einem weiteren Gelenkglied 124 verbunden. Das Gelenkglied 124 ist an einem Gelenk 125 gelenkig am Halteelement 110 gehalten und relativ zu diesem schwenkbar.

Das Gelenkglied 124 ist vorliegend ungefähr scheibenförmig ausgestaltet und umfasst am Außenrand zumindest abschnittsweise Eingriffselemente 126.

Die von den Gelenken 121, 123 und 125 definierten Achsen sind parallel zueinander und parallel zur Schwenkachse 60 ausgerichtet. Der Abstand der Schwenkachse 60 von der Achse des Gelenkes 125 ist gleich groß wie der Abstand der Achsen der Gelenke 121 und 123 voneinander. In entsprechender Weise ist der Abstand der Schwenkachse 60 von der Achse des Gelenkes 121 gleich groß wie der Abstand der Achsen der Gelenke 123 und 125 voneinander.

Die Gelenkanordnung 106 bildet auf diese Weise ein Viergelenk und insbesondere ein Gelenkparallelogramm 128.

Die Gelenkanordnung 108, die der Sprüheinheit 80 zugeordnet ist, ist korrespondierend und weitgehend symmetrisch ausgestaltet zur Gelenkanordnung 106, die der Sprüheinheit 54 zugeordnet ist.

Den Gelenkgliedern 120, 122 und 124 entsprechen Gelenkglieder 130, 132 bzw. 134. Den Gelenken 121, 123, und 125 entsprechen Gelenke 131, 133 bzw. 135. Das vorliegend ebenfalls scheibenförmige Gelenkglied 134 umfasst am Außenrand zumindest abschnittsweise Eingriffselemente 136. Die Gelenkanordnung 108 bildet ebenfalls ein Viergelenk und insbesondere ein Gelenkparallelogramm 138. Die Gelenkanordnungen 106, 108 sind in einer gemeinsamen Ebene angeordnet. Die Achsen der Gelenke 121, 123, 125, 131, 133 und 135 verlaufen parallel zueinander.

Die Gelenkglieder 122 und 132 durchgreifen die Durchgangsöffnung 50 am Abdeckelement 44. Auf diese Weise sind die Gelenkglieder 124 und 134 und die Antriebseinheit 104 im Innenraum 42 angeordnet und dadurch geschützt.

Die Eingriffselemente 126 stehen mit den Eingriffselementen 136 in Eingriff und bilden gemeinsam mit diesen eine Verzahnung 139.

Die Symmetrie zwischen den Gelenkanordnungen 106, 108 wird vorliegend lediglich durch die Kopplung mit der Antriebseinheit 104 durchbrochen. Im vorliegenden Fall greift der Kolben 116 über ein Koppelglied 140 am Gelenkglied 134 an. Denkbar jedoch auch, dass die Antriebseinheit 104 an der Gelenkanordnung 106 angreift, beispielsweise an deren Gelenkglied 124.

Der Angriffspunkt des Kolbens 116 ist im Abstand zur Achse des Gelenkes 135 angeordnet. Beim Betätigen der Antriebseinheit 104 bewegt sich der Kolben 116. Aufgrund dessen wird das Gelenkglied 134 am Gelenk 135 verschwenkt.

Dies führt zu einer Verschwenkung des Sprührohrs 82 aufgrund der Kopplung über die Gelenkanordnung 108.

Aufgrund der Kopplung der Gelenkglieder 134 und 124 über die Verzahnung 139 wird auch das Gelenkglied 124 verschwenkt. Die Schwenkbewegung erfolgt am Gelenk 125 und ist der Schwenkbewegung des Gelenkgliedes 134 entgegengesetzt. Aufgrund der Kopplung über die Gelenkanordnung 106 wird das Sprührohr 56 verschwenkt.

Über nur eine Antriebseinheit 104 besteht auf diese Weise die Möglichkeit, beide Sprührohre 56, 82 gleichzeitig zu verschwenken, um die parallel zueinander ausgerichteten Schwenkachsen 60 bzw. 84. Der Betrag des jeweiligen Schwenkwinkels ist identisch. Die Verschwenkung der Sprührohre 56, 82 ist gegenläufig. Wird das Sprührohr 56 in Bezug auf die Schwenkachse 60 in einer Schwenkrichtung verschwenkt, verschwenkt das Sprührohr 82 in Bezug auf die Schwenkachse 84 in der Gegenrichtung.

Der Schwenkwinkel, um den die Sprührohre 56 und 82 verschwenkbar sind, beträgt im vorliegenden Fall jeweils ungefähr 60°. Je nach Auslegung der Antriebseinheit 104 und/oder der Gelenkanordnungen 106, 108 könnte der Schwenkwinkel jedoch auch größer oder kleiner ausfallen. Durch Einsatz beispielsweise eines Mehrstellungs-Kolben-Zylinder-Aggregates könnte vorgesehen sein, dass über die Steuereinrichtung 36 der Schwenkwinkel beeinflussbar ist.

Im vorliegenden Fall können die Sprüheinheiten 54, 80 insbesondere deren Sprührohre 56 bzw. 82, eine jeweilige erste Stellung einnehmen (Figuren 2 und 3). In der ersten Stellung sind die Sprührohre 56, 82 so ausgerichtet, dass die Sprührichtungen 76 bzw. 98 voneinander weggewandt sind. In Draufsicht auf die Sprüheinheiten 54, 80 in axialer Richtung sind die Sprührichtungen 76, 98 ungefähr V-förmig zueinander ausgerichtet, vorliegend unter einem spitzen Winkel von ungefähr 60°. Dieser Winkel könnte jedoch auch größer oder kleiner sein.

Durch Betätigen der Antriebseinheit 104 können die Sprüheinheiten 54, 80, insbesondere deren Sprührohr 56 bzw. 82, in eine jeweilige zweite Stellung verschwenkt werden (Figur 4).

In der zweiten Stellung überkreuzen die Sprührichtungen 76, 98 einander. In Draufsicht auf die Sprüheinheiten 54, 80 in axialer Richtung sind die Sprührichtungen 76, 98 ungefähr X-förmig gebildet.

Die Konfiguration der erfindungsgemäßen Sprühvorrichtung 22 ermöglicht deren vielseitigen Einsatz bei der Fahrzeugwaschanlage 10, beispielsweise für nachfolgend erläuterte unterschiedliche Reinigungsprogramme. Durch die Möglichkeit der Verschwenkung beider Sprührohre 56, 82 besteht ferner die Möglichkeit, die Reinigungsflüssigkeit gezielt auf Fahrzeugoberflächen auszurichten und dadurch ein besseres Reinigungsergebnis zu erzielen. Über die Verstelleinrichtung 102 können die Sprührohre 56, 82 mit nur einer Antriebseinheit 104 verschwenkt werden. Es ist eine kostengünstige Herstellung der Sprühvorrichtung 22 bei zugleich kompakter Bauform möglich.

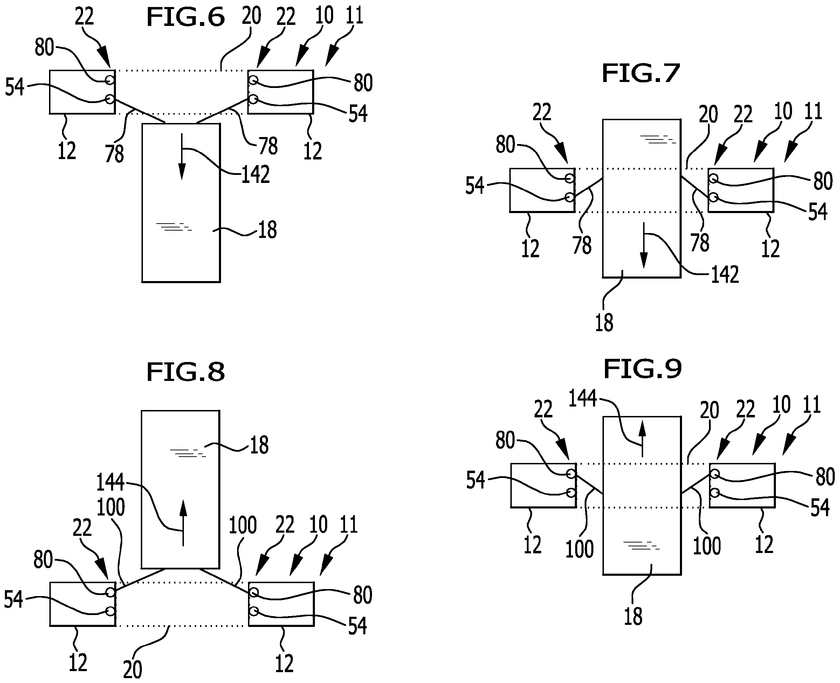

Ein Reinigungsprogramm der Fahrzeugwaschanlage 10 wird nachfolgend unter Verweis auf die Figuren 6 bis 9 erläutert.

Die Figuren 6 bis 9 zeigen schematisch Relativpositionen des Waschportals 11 und des Fahrzeugs 18. Während zweier erster Verfahrensschritte bewegt sich das Waschportal 11 in Pfeilrichtung 142 (Figuren 6 und 7), bei den darauffolgenden beiden Verfahrensschritten in der entgegengesetzten Bewegungsrichtung 144 (Figuren 8 und 9). Die Überfahrt des Waschportals 11 erfolgt jeweils von der Front 28 bis zum Heck 30 und umgekehrt.

Bei der ersten Überfahrt nimmt das Sprührohr 56 zunächst die erste Stellung ein und ist mit unter Hochdruck stehendem Wasser beaufschlagt. Das Sprührohr 82 ist nicht mit Reinigungsflüssigkeit beaufschlagt. In der ersten Stellung weist die Sprührichtung 76 eine Komponente in der Bewegungsrichtung 142 auf (Figur 6). Dadurch kann die Front 28 besonders gut mit Reinigungsflüssigkeit beaufschlagt werden, ferner Anbauteile wie beispielsweise Außenspiegel von der Vorderseite.

Ungefähr im Bereich der Fahrzeugmitte wird die Antriebseinheit 104 betätigt und das Sprührohr 56 in die zweite Stellung verschwenkt. Die Sprührichtung 76 weist dadurch eine Komponente entgegen der Bewegungsrichtung 142 auf. Anbauteile wie beispielsweise Außenspiegel werden von der entgegengesetzten Seite beaufschlagt (Figur 7). Die Bewegung des Waschportals 11 wird fortgesetzt, bis die Sprüheinrichtung 22 im Bereich des Hecks 30 angeordnet ist und das Heck 30 ebenfalls mit unter Hochdruck stehendem Wasser beaufschlagt ist.

Im Anschluss daran entfällt die Beaufschlagung des Sprührohrs 56 mit Reinigungsflüssigkeit. Es wird nur das Sprührohr 82 mit dem Gemisch aus Wasser und Reinigungschemikalie beaufschlagt. Das Sprührohr 82 wird in die erste Stellung überführt (Figur 8). Dies erlaubt es, das Heck 30 mit der zweiten Reinigungsflüssigkeit zu beaufschlagen. Das Sprührohr 56 ist nicht mit Reinigungsflüssigkeit beaufschlagt.

Im Anschluss daran wird das Waschportal 11 in der Bewegungsrichtung 144 bewegt. In der ersten Stellung weist die Sprührichtung 98 eine Komponente in der Bewegungsrichtung 144 auf. Anbauteile wie beispielsweise Außenspiegel können von der Rückseite beaufschlagt werden.

Ungefähr im Bereich der Fahrzeugmitte wird das Sprührohr 82 in die zweite Stellung verschwenkt (Figur 9). Die Sprührichtung 98 weist dadurch eine Komponente entgegen der Bewegungsrichtung 144 auf. Anbauteile wie beispielsweise Außenspiegel können von der Vorderseite mit Reinigungsflüssigkeit beaufschlagt werden. Die Bewegung des Waschportals 11 wird fortgesetzt, bis die Sprüheinrichtung 22 im Bereich der Front 28 angeordnet und die Front 28 ebenfalls mit der zweiten Reinigungsflüssigkeit beaufschlagt ist.

Im Anschluss daran kann eine Bürstenwäsche des Fahrzeugs 18 durchgeführt werden.

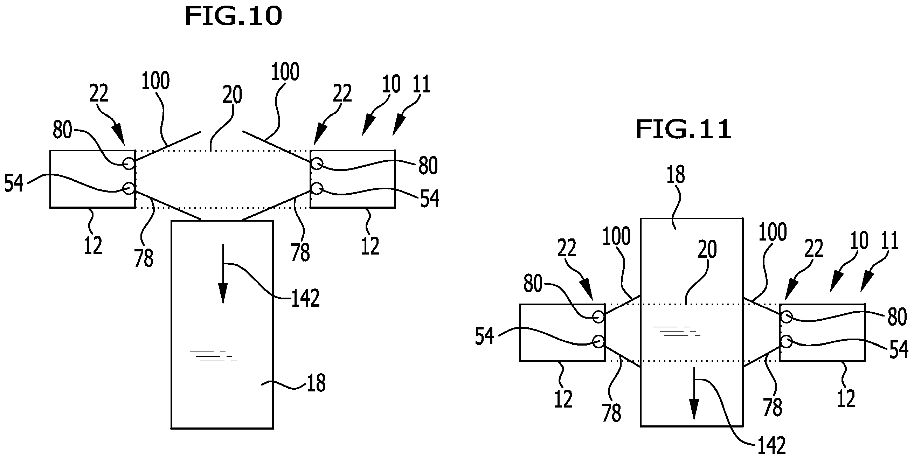

Die Figuren 10 und 11 stellen schematisch den Ablauf eines verkürzten Reinigungsprogramms dar, wobei bei einer Überfahrt des Waschportals 11 über das Fahrzeug 18 sowohl das Sprührohr 56 als auch das Sprührohr 82 mit der jeweiligen Reinigungsflüssigkeit beaufschlagt sind und dementsprechend das Fahrzeug 18 gleichzeitig mit beiden Reinigungsflüssigkeiten beaufschlagt wird.

Zunächst befindet sich das Waschportal 11 im Bereich der Front 28. Beide Sprührohre 56, 82 nehmen die erste Stellung ein. Aus diesem Grund weist die Sprührichtung 76 eine Komponente in der Bewegungsrichtung 142 auf und die Sprührichtung 98 eine Bewegungskomponente entgegen der Bewegungsrichtung 142.

Das Waschportal 11 wird relativ zum Fahrzeug 18 bewegt. Bei dieser Bewegung werden zunächst Fahrzeugflächen mit unter Hochdruck stehendem Wasser beaufschlagt und abgewaschen, und unmittelbar danach werden die Fahrzeugflächen mit dem Gemisch aus Wasser und Reinigungsflüssigkeit beaufschlagt (Figur 11). Die Bewegung erfolgt solange, bis das Waschportal 11 im Bereich des Fahrzeughecks 30 angeordnet ist.

Im Anschluss daran kann eine Bürstenwäsche des Fahrzeugs 18 durchgeführt werden.

Wie bereits erwähnt kann vorgesehen sein, dass die erste Reinigungsflüssigkeit abweichend von obiger Schilderung ein Gemisch aus Wasser und einer Reinigungschemikalie ist und die zweite Reinigungsflüssigkeit unter Hochdruck stehendes Wasser.

Über die offenbarte vielseitige Sprühvorrichtung 22 lassen sich bei der erfindungsgemäßen Fahrzeugwaschanlage 10 somit beispielsweise Reinigungsprogramme unterschiedlicher Intensität ausführen, beispielsweise die anhand der Figuren 6 bis 9 erläuterte Intensivreinigung oder die anhand der Figuren 10 und 11 erläuterte Schnellreinigung.

### Bezugszeichenliste:

- 10: Fahrzeugwaschanlage
- 11: Waschportal
- 12: Trageinrichtung
- 14: Portalsäule
- 16: Aufstellfläche
- 18: Fahrzeug
- 20: Traverse
- 22: Sprühvorrichtung
- 24: Seitenwaschbürste
- 26: Fahrzeugseitenfläche
- 28: Fahrzeugfront
- 30: Fahrzeugheck
- 32: Dachbürste
- 34: Antriebseinrichtung
- 36: Steuereinrichtung
- 38: Längsrichtung
- 40: Gehäuse
- 42: Innenraum
- 44: Abdeckelement
- 46: Abdeckelement
- 48: Zwischenraum
- 50: Durchgangsöffnung
- 52: Kontur Durchgangsöffnung
- 54: erste Sprüheinheit
- 56: erstes Sprührohr
- 58: Sprühdüsen
- 60: Schwenkachse
- 62: Lagereinrichtung
- 64: Lagerbuchse
- 66: Lagerhülse
- 68: Endabschnitt
- 70: Zufuhrleitung
- 72: Pumpaggregat
- 74: Ventilelement
- 76: Sprührichtung
- 78: Sprühstrahl
- 80: zweite Sprüheinheit
- 82: zweites Sprührohr
- 84: Schwenkachse
- 86: Endabschnitt
- 88: Lagerhülse
- 90: Sprühdüsen
- 92: Zufuhrleitung
- 94: Pumpaggregat
- 96: Ventilelement
- 98: Sprührichtung
- 100: Sprühstrahl
- 102: Verstelleinrichtung
- 104: Antriebseinheit
- 106, 108: Gelenkanordnung
- 110: Halteelement
- 112: Kolben-Zylinder-Aggregat
- 114: Zylinder
- 116: Kolben
- 118: Betätigungseinrichtung
- 120, 122, 124, 130, 132, 134: Gelenkglied
- 121, 123, 125, 131, 133, 135: Gelenk
- 126, 130: Eingriffselemente
- 128, 138: Gelenkparallelogramm
- 139: Verzahnung
- 140: Koppelglied
- 142, 144: Bewegungsrichtung

## Patentansprüche

1. Fahrzeugwaschanlage, umfassend eine Trageinrichtung (12), mindestens eine an der Trageinrichtung (12) angeordnete Sprühvorrichtung (22) und eine Steuereinrichtung (36),
wobei die Sprühvorrichtung (22) Folgendes umfasst:
- eine erste Sprüheinheit (54), die eine Mehrzahl von Sprühdüsen (58) umfasst oder bildet, über die ein zu reinigendes Fahrzeug (18) mit einer ersten Reinigungsflüssigkeit beaufschlagbar ist;
- eine zweite Sprüheinheit (80), die eine Mehrzahl von Sprühdüsen (90) umfasst oder bildet, über die das Fahrzeug (18) mit einer zweiten Reinigungsflüssigkeit beaufschlagbar ist; und
- eine von der Steuereinrichtung (36) ansteuerbare Verstelleinrichtung (102) mit einer Antriebseinheit (104), die mit beiden Sprüheinheiten (54, 80) gekoppelt ist;
wobei von den Sprüheinheiten (54, 80) abgegebene Reinigungsflüssigkeit auf ein zu reinigendes Fahrzeug (18) ausrichtbar ist, wobei jede Sprüheinheit (54, 80) von einer jeweiligen ersten Stellung in eine jeweilige zweite Stellung und umgekehrt verschwenkbar ist zum Ändern der Ausrichtung (76, 98) der jeweiligen Sprühdüsen (58, 90), wobei die erste Sprüheinheit (54) und die zweite Sprüheinheit (80) um voneinander unterschiedliche Schwenkachsen (60, 84) verschwenkbar sind, **dadurch gekennzeichnet, dass** die Sprüheinheiten (54, 80) seitlich neben dem Fahrzeug (18) positioniert sind, wobei die Schwenkachsen (60, 84) quer und insbesondere senkrecht zu einer Aufstellfläche (16) für das Fahrzeug (18) ausgerichtet sind,
wobei beide Sprüheinheiten (54, 80) über die Antriebseinheit (104) von der jeweiligen ersten Stellung in die jeweilige zweite Stellung und umgekehrt überführbar sind,
wobei bei Einnahme der ersten Stellung durch die Sprüheinheiten (54, 80) aus den Sprühdüsen (58, 90) austretende Ströme von Reinigungsflüssigkeit voneinander weg gewandt sind und insbesondere einen spitzen Winkel einschließen,
wobei mit der Fahrzeugwaschanlage (10) ein Reinigungsprogramm ausführbar ist, bei dem:
- das Fahrzeug (18) und die Sprühvorrichtung (22) in Längsrichtung des Fahrzeugs (18) zueinander bewegt werden,
- ausgehend von einem ersten Fahrzeugende (28) die erste Sprüheinheit (54) und die zweite Sprüheinheit (80) die jeweilige erste Stellung einnehmen, von den Sprühdüsen (58) der ersten Sprüheinheit (54) die erste Reinigungsflüssigkeit versprüht wird und von den Sprühdüsen (90) der zweiten Sprüheinheit (80) die zweite Reinigungsflüssigkeit, bis die Sprühvorrichtung (22) im Bereich des zweiten Fahrzeugendes (30) angeordnet ist,
wobei das Fahrzeug(18) bei der Relativbewegung zunächst mit der ersten Reinigungsflüssigkeit und anschließend mit der zweiten Reinigungsflüssigkeit beaufschlagt wird.

2. Fahrzeugwaschanlage nach Anspruch 1, **dadurch gekennzeichnet, dass** zumindest eines der Folgenden gilt:
- die erste Sprüheinheit (54) umfasst ein Sprührohr (56), an der die Sprühdüsen (58) gebildet sind, und/oder die zweite Sprüheinheit (80) umfasst ein Sprührohr (82), an der die Sprühdüsen (90) gebildet sind;
- das Sprührohr (56) der ersten Sprüheinheit (54) definiert deren Schwenkachse (60), und/oder das Sprührohr (82) der zweiten Sprüheinheit (80) definiert deren Schwenkachse (84).

3. Fahrzeugwaschanlage nach einem der voranstehenden Ansprüche,
**dadurch gekennzeichnet, dass** die erste Sprüheinheit (54) und die zweite Sprüheinheit (80) seitlich nebeneinander positioniert sind und/oder dass die erste Schwenkachse (60) und die zweite Schwenkachse (84) parallel zueinander ausgerichtet sind.

4. Fahrzeugwaschanlage nach einem der voranstehenden Ansprüche, **dadurch gekennzeichnet, dass** zumindest eines der Folgenden gilt:
- die erste Sprüheinheit (54) und die zweite Sprüheinheit (80) sind mit unterschiedlichen Reinigungsflüssigkeiten beaufschlagbar;
- die erste Reinigungsflüssigkeit ist unter Hochdruck stehendes Wasser und/oder die zweite Reinigungsflüssigkeit ein Gemisch aus Wasser mit einer Reinigungschemikalie, oder umgekehrt.

5. Fahrzeugwaschanlage nach einem der voranstehenden Ansprüche, **dadurch gekennzeichnet, dass** zumindest eines der Folgenden gilt:
- die erste Sprüheinheit (54) und die zweite Sprüheinheit (80) sind simultan verschwenkbar;
- die erste Sprüheinheit (54) und die zweite Sprüheinheit (80) sind gegenläufig zueinander verschwenkbar;
- ein Schwenkwinkel beim Verschwenken der ersten Sprüheinheit (54) und ein Schwenkwinkel beim Verschwenken der zweiten Sprüheinheit (80) weisen den gleichen oder im Wesentlichen gleichen Betrag auf.

6. Fahrzeugwaschanlage nach einem der voranstehenden Ansprüche, **dadurch gekennzeichnet, dass** zumindest eines der Folgenden gilt:
- die Ausrichtung (76, 98) der Sprühdüsen (58, 90) der Sprüheinheiten (54, 80) ist in der zweiten Stellung unterschiedlich;
- bei Einnahme der zweiten Stellung durch die Sprüheinheiten (54, 80) überkreuzen aus den Sprühdüsen (58, 90) austretende Ströme von Reinigungsflüssigkeit einander;
- die Sprühvorrichtung (22) umfasst der jeweiligen Sprüheinheit (54, 80) zugeordnet eine Zufuhrleitung (70, 92) und ein Pumpaggregat (72, 94) zum Zuführen der ersten Reinigungsflüssigkeit oder zweiten Reinigungsflüssigkeit, wobei die Pumpaggregate (72, 94) von einer Steuereinrichtung (36) wahlweise aktivierbar oder deaktivierbar sind.

7. Fahrzeugwaschanlage nach einem der voranstehenden Ansprüche,
**dadurch gekennzeichnet, dass** die Antriebseinheit (104) pneumatisch, hydraulisch, elektrisch und/oder elektromagnetisch ausgestaltet ist, und/oder dass die Antriebseinheit (104) einen Linearantrieb umfasst oder bildet, insbesondere ein Kolben-Zylinder-Aggregat (112), und dass die Bewegung des Lineartriebs über eine Gelenkanordnung (106, 108) der Verstelleinrichtung (102) in die Schwenkbewegungen der Sprüheinheiten (54, 80) umgesetzt wird.

8. Fahrzeugwaschanlage nach einem der voranstehenden Ansprüche,
**dadurch gekennzeichnet, dass** zumindest eines der Folgenden gilt:
- die Sprüheinheiten (54, 80) sind über die Verstelleinrichtung (102) mechanisch mit der Antriebseinheit (104) gekoppelt;
- die Verstelleinrichtung (102) umfasst mindestens ein Gelenkglied (120, 130), das mit einer Sprüheinheit (54, 80) gekoppelt ist und an der die Antriebseinrichtung (104) direkt oder indirekt angreift, insbesondere dass ein jeweiliges Gelenkglied (120, 130) für die erste Sprüheinheit (54) und die zweite Sprüheinheit (80) vorgesehen ist;
- die Verstelleinrichtung (102) umfasst der ersten Sprüheinheit (54) und der zweiten Sprüheinheit (80) zugeordnet jeweils eine Gelenkanordnung (106, 108), wobei Gelenkglieder (124, 134) beider Gelenkanordnungen (106, 108) miteinander vorzugsweise mechanisch in Eingriff stehen und die Antriebseinheit (104) an einem der Gelenkglieder (134) angreift.

9. Fahrzeugwaschanlage nach Anspruch 8, **dadurch gekennzeichnet, dass** zumindest eines der Folgenden gilt:
- die Gelenkglieder (124, 134) der Gelenkanordnungen (106, 108) stehen über eine Verzahnung (139) miteinander in Eingriff;
- die Gelenkanordnungen (106, 108) sind als Gelenkparallelogramme (128, 138) ausgebildet;
- die Gelenkanordnungen (106, 108) definieren eine gemeinsame Ebene, die vorzugsweise quer zu einer Erstreckungsrichtung der ersten Sprüheinheit (54) und/oder der zweiten Sprüheinheit (80) ausgerichtet ist.

10. Fahrzeugwaschanlage nach einem der voranstehenden Ansprüche, **dadurch gekennzeichnet, dass** zumindest eines der Folgenden gilt:
- die Verstelleinrichtung (102) umfasst oder bildet ein Halteelement (110) zum Festlegen der Gelenkanordnungen (106, 108) an einer Trageinrichtung (12) der Fahrzeugwaschanlage (10);
- der Sprühvorrichtung (22) ist ein Abdeckelement (46) zugeordnet, das die Sprüheinheiten (54, 80) an einer dem Fahrzeug (18) zugewandten Seite überdeckt und Durchgangsöffnungen (52) für die von den Sprühdüsen (58, 90) abgegebene Reinigungsflüssigkeit aufweist;
- der Sprühvorrichtung (22) ist ein Abdeckelement (44) zugeordnet, das die Antriebseinheit (104) relativ zu den Sprüheinheiten (54, 80) überdeckt, wobei Komponenten der Verstelleinrichtung (102) das Abdeckelement (44) durchgreifen.

11. Fahrzeugwaschanlage nach einem der voranstehenden Ansprüche, **dadurch gekennzeichnet, dass** die Sprühvorrichtung (22) eine Lagereinrichtung (62) umfasst zur schwenkbaren Lagerung der ersten Sprüheinheit (54) und der zweiten Sprüheinheit (80) an einer Trageinrichtung (12) der Fahrzeugwaschanlage (10), vorzugsweise dass die Lagereinrichtung (62) zumindest eines der Folgenden umfasst:
- eine Lagerbuchse (64), die von einem Sprührohr (56, 82) der ersten Sprüheinheit (54) und/oder der zweiten Sprüheinheit (80) durchgriffen wird.
- mindestens eine Lagerhülse (66, 88), in die ein Sprührohr (56, 82) der ersten oder zweiten Sprüheinheit (54, 80) mit einem Endabschnitt (68, 86) eingreift.

12. Fahrzeugwaschanlage nach einem der voranstehenden Ansprüche, **dadurch gekennzeichnet, dass** die Fahrzeugwaschanlage (10) ein relativ zu einem Fahrzeug (18) bewegbares Waschportal (11) mit einer die Trageinrichtung (12) umfassenden oder bildenden Portalsäule (14) umfasst, oder dass die Fahrzeugwaschanlage eine Waschstraße ist mit einer Fördereinrichtung zum Transportieren des Fahrzeugs (18), wobei die Trageinrichtung seitlich neben dem Fahrzeug (18) positioniert ist.

13. Fahrzeugwaschanlage nach einem der voranstehenden Ansprüche, **dadurch gekennzeichnet, dass** mit der Fahrzeugwaschanlage (10) ein Reinigungsprogramm ausführbar ist, bei dem:
- das Fahrzeug (18) und die Sprühvorrichtung (22) in Längsrichtung des Fahrzeugs (18) relativ zueinander bewegt werden,
- ausgehend von einem ersten Fahrzeugende (28) die erste Sprüheinheit (54) die erste Stellung einnimmt und von den Sprühdüsen der ersten Sprüheinheit (54) die erste Reinigungsflüssigkeit versprüht wird,
- im Bereich zwischen dem ersten Fahrzeugende (28) und dem zweiten Fahrzeugende (30), insbesondere im Bereich der Fahrzeugmitte, die erste Sprüheinheit (54) über die Verstelleinrichtung (102) in die zweite Stellung überführt wird,
- und das Fahrzeug (18) und die Sprühvorrichtung (22) in Längsrichtung des Fahrzeugs (18) zueinander bewegt werden, bis die Sprühvorrichtung (22) im Bereich des zweiten Fahrzeugendes (30) angeordnet ist,
wobei die Sprühdüsen (90) der zweiten Sprüheinheit (80) nicht mit der zweiten Reinigungsflüssigkeit beaufschlagt sind.

14. Fahrzeugwaschanlage nach Anspruch 13, **dadurch gekennzeichnet, dass** bei dem Reinigungsprogramm anschließend
- ausgehend vom zweiten Fahrzeugende (30) die zweite Sprüheinheit (80) die erste Stellung einnimmt und von den Sprühdüsen (90) der zweiten Sprüheinheit (80) die zweite Reinigungsflüssigkeit versprüht wird,
- im Bereich zwischen dem zweiten Fahrzeugende (30) und dem ersten Fahrzeugende (28), insbesondere im Bereich der Fahrzeugmitte, die zweite Sprüheinheit (80) über die Verstelleinrichtung (102) in die zweite Stellung überführt wird,
- und das Fahrzeug (18) und die Sprühvorrichtung (22) in Längsrichtung des Fahrzeugs (18) zueinander bewegt werden, bis die Sprühvorrichtung (22) im Bereich des ersten Fahrzeugendes (28) angeordnet ist,
wobei die Sprühdüsen (58) der ersten Sprüheinheit (54) nicht mit der ersten Reinigungsflüssigkeit beaufschlagt sind.

15. Fahrzeugwaschanlage nach einem der voranstehenden Ansprüche,
**dadurch gekennzeichnet, dass** die Sprührichtung (76) erster Reinigungsflüssigkeit der Sprühdüsen (58) der ersten Sprüheinheit (54) und die Sprührichtung (98) zweiter Reinigungsflüssigkeit der Sprühdüsen der zweiten Sprüheinheit (80) in der ersten Stellung eine Richtungskomponente in der Bewegungsrichtung (142, 144) aufweist und in der zweiten Stellung eine Richtungskomponente entgegen der Bewegungsrichtung (142, 144) aufweist.

## Claims

1. Car wash system comprising a support apparatus (12), at least one spraying device (22) arranged on the support apparatus (12), and a control apparatus (36),
wherein the spraying device (22) comprises the following:
- a first spraying unit (54), which comprises or forms a plurality of spray nozzles (58) via which a first cleaning liquid can be applied to a car (18) to be cleaned;
- a second spraying unit (80), which comprises or forms a plurality of spray nozzles (90) via which a second cleaning liquid can be applied to the car (18); and
- an adjusting apparatus (102) which is controllable by the control apparatus (36) and has a drive unit (104) coupled to both spraying units (54, 80);
wherein the cleaning liquid discharged by the spraying units (54, 80) can be aimed at a car (18) to be cleaned,
wherein each spraying unit (54, 80) is pivotable from a respective first position to a respective second position, and vice versa, for changing the orientation (76, 98) of the respective spray nozzles (58, 90), wherein the first spraying unit (54) and the second spraying unit (80) are pivotable about mutually different pivot axes (60, 84),
**characterized in that** the spraying units (54, 80) are positioned laterally next to the car (18), wherein
the pivot axes (60, 84) are oriented transversely and in particular perpendicularly to a set-down surface (16) for the car (18),
wherein both spraying units (54, 80) are transferrable from the respective first position to the respective second position, and vice versa, via the drive unit (104),
wherein, when the spraying units (54, 80) occupy the first position, streams of cleaning liquid exiting the spray nozzles (58, 90) are turned away from one another and in particular enclose an acute angle,
wherein a cleaning program can be carried out with the car wash system (10), in which cleaning program:
- the car (18) and the spraying device (22) are moved to one another in the longitudinal direction of the car (18),
- starting from a first car end (28), the first spraying unit (54) and the second spraying unit (80) occupy the respective first position, the first cleaning liquid is sprayed by the spray nozzles (58) of the first spraying unit (54) and the second cleaning liquid is sprayed by the spray nozzles (90) of the second spraying unit (80) until the spraying device (22) is arranged in the region of the second car end (30),
wherein first the first cleaning liquid and subsequently the second cleaning liquid are applied to the car (18) during the relative movement.

2. Car wash system in accordance with Claim 1, **characterized in that** at least one of the following applies:
- the first spraying unit (54) comprises a spray pipe (56) on which the spray nozzles (58) are formed, and/or the second spraying unit (80) comprises a spray pipe (82) on which the spray nozzles (90) are formed;
- the spray pipe (56) of the first spraying unit (54) defines the pivot axis (60) thereof, and/or the spray pipe (82) of the second spraying unit (80) defines the pivot axis (84) thereof.

3. Car wash system in accordance with any of the preceding Claims,
**characterized in that** the first spraying unit (54) and the second spraying unit (80) are positioned laterally next to one another and/or **in that** the first pivot axis (60) and the second pivot axis (84) are oriented parallel to one another.

4. Car wash system in accordance with any of the preceding Claims,
**characterized in that** at least one of the following applies:
- different cleaning liquids are supplyable to the first spraying unit (54) and the second spraying unit (80);
- the first cleaning liquid is water at high pressure and/or the second cleaning liquid is a mixture of water with a cleaning chemical, or vice versa.

5. Car wash system in accordance with any of the preceding Claims,
**characterized in that** at least one of the following applies:
- the first spraying unit (54) and the second spraying unit (80) are pivotable simultaneously;
- the first spraying unit (54) and the second spraying unit (80) are pivotable in opposite directions to one another;
- a pivot angle during the pivoting of the first spraying unit (54) and a pivot angle during the pivoting of the second spraying unit (80) have the same or substantially the same magnitude.

6. Car wash system in accordance with any of the preceding Claims,
**characterized in that** at least one of the following applies:
- the orientation (76, 98) of the spray nozzles (58, 90) of the spraying units (54, 80) is different in the second position;
- when the spraying units (54, 80) occupy the second position, streams of cleaning liquid exiting from the spray nozzles (58, 90) cross one another;
- the spraying device (22) comprises, in a manner assigned to the respective spraying unit (54, 80), a feed line (70, 92) and a pump unit (72, 94) for feeding the first cleaning liquid or second cleaning liquid, wherein the pump units (72, 94) are configured to selectively be activated or deactivated by a control apparatus (36).

7. Car wash system in accordance with any of the preceding Claims,
**characterized in that** the drive unit (104) is configured pneumatically, hydraulically, electrically and/or electromagnetically, and/or **in that** the drive unit (104) comprises or forms a linear drive, in particular a piston-cylinder unit (112), and **in that** the movement of the linear drive is converted via an articulated assembly (106, 108) of the adjusting apparatus (102) into the pivoting movements of the spraying units (54, 80).

8. Car wash system in accordance with any of the preceding Claims,
**characterized in that** at least one of the following applies:
- the spraying units (54, 80) are mechanically coupled to the drive unit (104) via the adjusting apparatus (102);
- the adjusting apparatus (102) comprises at least one articulated member (120, 130) which is coupled to a spraying unit (54, 80) and with which the drive apparatus (104) engages directly or indirectly, in particular **in that** a respective articulated member (120, 130) is provided for the first spraying unit (54) and the second spraying unit (80);
- the adjusting apparatus (102) comprises a respective articulated assembly (106, 108) assigned to the first spraying unit (54) and the second spraying unit (80), wherein articulated members (124, 134) of both articulated assemblies (106, 108) are preferably mechanically engaged with one another and the drive unit (104) engages in one of the articulated members (134).

9. Car wash system in accordance with Claim 8, **characterized in that** at least one of the following applies:
- the articulated members (124, 134) of the articulated assemblies (106, 108) engage with one another via a toothing (139);
- the articulated assemblies (106, 108) are designed as articulated parallelograms (128, 138);
- the articulated assemblies (106, 108) define a common plane which is preferably oriented transversely to an extension direction of the first spraying unit (54) and/or of the second spraying unit (80).

10. Car wash system in accordance with any of the preceding Claims,
**characterized in that** at least one of the following applies:
- the adjusting apparatus (102) comprises or forms a holding element (110) for fixing the articulated assemblies (106, 108) to a support apparatus (12) of the car wash system (10);
- assigned to the spraying device (22) is a cover element (46) which covers the spraying units (54, 80) on a side facing the car (18) and has through-openings (52) for the cleaning liquid discharged by the spray nozzles (58, 90);
- the spraying device (22) is assigned a cover element (44) which covers the drive unit (104) relative to the spraying units (54, 80), wherein components of the adjusting apparatus (102) pass through the cover element (44).

11. Car wash system in accordance with any of the preceding Claims,
**characterized in that** the spraying device (22) comprises a bearing apparatus (62) for pivotably mounting the first spraying unit (54) and the second spraying unit (80) on a support apparatus (12) of the car wash system (10), preferably **in that** the bearing apparatus (62) comprises at least one of the following:
- a bearing bush (64) through which a spray pipe (56, 82) of the first spraying unit (54) and/or of the second spraying unit (80) passes.
- at least one bearing sleeve (66, 88) in which a spray pipe (56, 82) of the first or second spraying unit (54, 80) engages with an end portion (68, 86).

12. Car wash system in accordance with any of the preceding Claims,
**characterized in that** the car wash system (10) comprises a wash portal (11) which is movable relative to a car (18) and has a portal column (14) comprising or forming the support apparatus (12), or **in that** the car wash system is a tunnel-type car wash with a conveying apparatus for transporting the car (18), wherein the support apparatus is positioned laterally next to the car (18).

13. Car wash system in accordance with any of the preceding Claims,
**characterized in that** a cleaning program is to be carried out with the car wash system (10), in which cleaning program:
- the car (18) and the spraying device (22) are moved relative to one another in the longitudinal direction of the car (18),
- starting from a first car end (28), the first spraying unit (54) occupies the first position, and the first cleaning liquid is sprayed by the spray nozzles of the first spraying unit (54),
- in the region between the first car end (28) and the second car end (30), in particular in the region of the car center, the first spraying unit (54) is transferred via the adjusting apparatus (102) to the second position,
- and the car (18) and the spraying device (22) are moved to one another in the longitudinal direction of the car (18) until the spraying device (22) is arranged in the region of the second car end (30),
wherein the second cleaning liquid is not supplied to the spray nozzles (90) of the second spraying unit (80).

14. Car wash system in accordance with Claim 13, **characterized in that** in the cleaning program, subsequently,
- starting from the second car end (30), the second spraying unit (80) occupies the first position and the second cleaning liquid is sprayed by the spray nozzles (90) of the second spraying unit (80),
- in the region between the second car end (30) and the first car end (28), in particular in the region of the car center, the second spraying unit (80) is transferred via the adjusting apparatus (102) to the second position,
- and the car (18) and the spraying device (22) are moved to one another in the longitudinal direction of the car (18) until the spraying device (22) is arranged in the region of the first car end (28),
wherein the first cleaning liquid is not supplied to the spray nozzles (58) of the first spraying unit (54).

15. Car wash system in accordance with any of the preceding Claims,
**characterized in that** the spraying direction (76) of the first cleaning liquid of the spray nozzles (58) of the first spraying unit (54) and the spraying direction (98) of second cleaning liquid of the spray nozzles of the second spraying unit (80) in the first position have a directional component in the movement direction (142, 144) and in the second position have a directional component counter to the movement direction (142, 144).

## Revendications

1. Installation de lavage de véhicule, comprenant un équipement porteur (12), au moins un dispositif de pulvérisation (22) agencé contre l'équipement porteur (12) et un équipement de commande (36),
dans laquelle le dispositif de pulvérisation (22) comprend ce qui suit :
- une première unité de pulvérisation (54) qui comprend ou forme une pluralité de buses de pulvérisation (58) via lesquelles un véhicule (18) à nettoyer peut être sollicité avec un premier liquide de nettoyage ;
- une seconde unité de pulvérisation (80) qui comprend ou forme une pluralité de buses de pulvérisation (90) via lesquelles le véhicule (18) à nettoyer peut être sollicité avec un second liquide de nettoyage ; et
- un équipement de réglage (102), qui peut être piloté par l'équipement de commande (36), avec une unité d'entraînement (104) qui est couplée avec les deux unités de pulvérisation (54, 80) ;
dans laquelle un liquide de nettoyage distribué par les unités de pulvérisation (54, 80) peut être orienté vers un véhicule (18) à nettoyer,
dans laquelle chaque unité de pulvérisation (54, 80) peut être pivotée depuis une première position respective vers une seconde position respective et inversement pour une modification de l'orientation (76, 98) des buses de pulvérisation (58, 90) respectives,
dans laquelle la première unité de pulvérisation (54) et la seconde unité de pulvérisation (80) peuvent être pivotées autour d'axes de pivotement (60, 84) différents l'un de l'autre,
**caractérisée en ce que** les unités de pulvérisation (54, 80) sont positionnées latéralement à côté du véhicule (18),
dans laquelle les axes de pivotement (60, 84) sont orientés transversalement et en particulier verticalement par rapport à une surface d'appui (16) pour le véhicule (18),
dans laquelle les deux unités de pulvérisation (54, 80) peuvent être transférées via l'unité d'entraînement (104) depuis la première position respective vers la seconde position respective et inversement,
dans laquelle, lors de la prise de la première position par les unités de pulvérisation (54, 80), des flux de liquide de nettoyage sortant des buses de pulvérisation (58, 90) sont tournés en s'éloignant les uns des autres et forment en particulier un angle aigu,
dans laquelle un programme de nettoyage peut être exécuté avec l'installation de lavage de véhicule (10), où
- le véhicule (18) et le dispositif de pulvérisation (22) sont déplacés l'un par rapport à l'autre dans la direction longitudinale du véhicule (18),
- partant d'une première extrémité de véhicule (28) la première unité de pulvérisation (54) et la seconde unité de pulvérisation (80) prennent la première position respective, le premier liquide de nettoyage est pulvérisé par les buses de pulvérisation (58) de la première unité de pulvérisation (54) et le second liquide de nettoyage est pulvérisé par les buses de pulvérisation (90) de la seconde unité de pulvérisation (80), jusqu'à ce que le dispositif de pulvérisation (22) soit agencé dans la région de la seconde extrémité de véhicule (30),
dans laquelle, lors du déplacement relatif, le véhicule (18) est d'abord sollicité avec le premier liquide de nettoyage puis avec le second liquide de nettoyage.

2. Installation de lavage de véhicule selon la revendication 1, **caractérisée en ce que** s'applique au moins l'un de ce qui suit :
- la première unité de pulvérisation (54) comprend un tube de pulvérisation (56) contre lequel sont formées les buses de pulvérisation (58), et/ou la seconde unité de pulvérisation (80) comprend un tube de pulvérisation (82) contre lequel sont formées les buses de pulvérisation (90) ;
- le tube de pulvérisation (56) de la première unité de pulvérisation (54) définit les axes de pivotement (60) de celle-ci, et/ou le tube de pulvérisation (82) de la seconde unité de pulvérisation (80) définit les axes de pivotement (84) de celle-ci.

3. Installation de lavage de véhicule selon l'une des revendications précédentes, **caractérisée en ce que** la première unité de pulvérisation (54) et la seconde unité de pulvérisation (80) sont positionnées latéralement l'une à côté de l'autre et/ou **en ce que** le premier axe de pivotement (60) et le second axe de pivotement (84) sont orientés parallèlement l'un à l'autre.

4. Installation de lavage de véhicule selon l'une des revendications précédentes, **caractérisée en ce que** s'applique au moins l'un de ce qui suit :
- la première unité de pulvérisation (54) et la seconde unité de pulvérisation (80) peuvent être sollicitées avec des liquides de nettoyage différents ;
- le premier liquide de nettoyage est de l'eau se trouvant sous haute pression et/ou le second liquide de nettoyage est un mélange d'eau avec un produit chimique de nettoyage, ou inversement.

5. Installation de lavage de véhicule selon l'une des revendications précédentes, **caractérisée en ce que** s'applique au moins l'un de ce qui suit :
- la première unité de pulvérisation (54) et la seconde unité de pulvérisation (80) peuvent être pivotées simultanément ;
- la première unité de pulvérisation (54) et la seconde unité de pulvérisation (80) peuvent être pivotées l'une par rapport à l'autre en sens contraire ;
- un angle de pivotement lors du pivotement de la première unité de pulvérisation (54) et un angle de pivotement lors du pivotement de la seconde unité de pulvérisation (80) présentent la même valeur ou essentiellement la même valeur.

6. Installation de lavage de véhicule selon l'une des revendications précédentes, **caractérisée en ce que** s'applique au moins l'un de ce qui suit :
- l'orientation (76, 98) des buses de pulvérisation (58, 90) des unités de pulvérisation (54, 80) est différente dans la seconde position ;
- lors de la prise de la seconde position par les unités de pulvérisation (54, 80), des flux de liquide de nettoyage sortant des buses de pulvérisation (58, 90) se croisent les uns les autres;
- le dispositif de pulvérisation (22) comprend, attribués à l'unité de pulvérisation (54, 80) respective, une conduite d'amenée (70, 92) et un groupe de pompage (72, 94) pour amener le premier liquide de nettoyage ou le second liquide de nettoyage, dans laquelle les groupes de pompage (72, 94) peuvent être au choix activés ou désactivés par un équipement de commande (36).

7. Installation de lavage de véhicule selon l'une des revendications précédentes, **caractérisée en ce que** l'unité d'entraînement (104) est configurée de façon pneumatique, hydraulique, électrique et/ou électromagnétique, et/ou **en ce que** l'unité d'entraînement (104) comprend ou forme un entraînement linéaire, en particulier un groupe-piston-cylindre (112), et **en ce que** le déplacement de l'entraînement linéaire est converti en les déplacements de pivotement des unités de pulvérisation (54, 80) via un agencement d'articulation (106, 108) de l'équipement de réglage (102).

8. Installation de lavage de véhicule selon l'une des revendications précédentes, **caractérisée en ce que** s'applique au moins l'un de ce qui suit :
- les unités de pulvérisation (54, 80) sont couplées mécaniquement avec l'unité d'entraînement (104) via l'équipement de réglage (102) ;
- l'équipement de réglage (102) comprend au moins un organe d'articulation (120, 130) qui est couplé avec une unité de pulvérisation (54, 80) et contre laquelle l'unité d'entraînement (104) vient en prise directement ou indirectement, en particulier **en ce qu'**un organe d'articulation (120, 130) respectif est prévu pour la première unité de pulvérisation (54) et la seconde unité de pulvérisation (80) ;
- l'équipement de réglage (102) comprend, attribué à la première unité de pulvérisation (54) et à la seconde unité de pulvérisation (80), respectivement un agencement d'articulation (106, 108), dans laquelle des organes d'articulation (124, 134) des deux agencements d'articulation (106, 108) sont en prise l'un avec l'autre de préférence mécaniquement et l'unité d'entraînement (104) vient en prise contre l'un des organes d'articulation (134).

9. Installation de lavage de véhicule selon la revendication 8, **caractérisée en ce que** s'applique au moins l'un de ce qui suit :
- les organes d'articulation (124, 134) des agencements d'articulation (106, 108) sont en prise l'un avec l'autre via une denture (139) ;
- les agencements d'articulation (106, 108) sont conçus en tant que parallélogrammes d'articulation (128, 138) ;
- les agencements d'articulation (106, 108) définissent un plan commun qui est de préférence orienté transversalement à une direction d'extension de la première unité de pulvérisation (54) et/ou de la seconde unité de pulvérisation (80).

10. Installation de lavage de véhicule selon l'une des revendications précédentes, **caractérisée en ce que** s'applique au moins l'un de ce qui suit :
- l'équipement de réglage (102) comprend ou forme un élément de retenue (110) pour la fixation des agencements d'articulation (106, 108) contre un équipement porteur (12) de l'installation de lavage de véhicule (10) ;
- au dispositif de pulvérisation (22) est attribué un élément de couverture (46) qui recouvre les unités de pulvérisation (54, 80) sur un côté tourné vers le véhicule (18) et présente des ouvertures de passage (52) pour le liquide de nettoyage distribué par les buses de pulvérisation (58, 90) ;
- au dispositif de pulvérisation (22) est attribué un élément de couverture (44) qui recouvre l'unité d'entraînement (104) par rapport aux unités de pulvérisation (54, 80), dans laquelle interviennent des composantes de l'équipement de réglage (102) de l'élément de couverture (44).

11. Installation de lavage de véhicule selon l'une des revendications précédentes, **caractérisée en ce que** le dispositif de pulvérisation (22) comprend un équipement de palier (62) pour un montage pivotant de la première unité de pulvérisation (54) et de la seconde unité de pulvérisation (80) contre un équipement porteur (12) de l'installation de lavage de véhicule (10), de préférence **en ce que** l'équipement de palier (62) comprend au moins l'un de ce qui suit :
- une douille de palier (64) qui est traversée par un tube de pulvérisation (56, 82) de la première unité de pulvérisation (54) et/ou de la seconde unité de pulvérisation (80),
- au moins un manchon de palier (66, 88) dans lequel un tube de pulvérisation (56, 82) de la première ou de la seconde unité de pulvérisation (54, 80) vient en prise avec une section d'extrémité (68, 86).

12. Installation de lavage de véhicule selon l'une des revendications précédentes, **caractérisée en ce que** l'installation de lavage de véhicule (10) comprend un portique de lavage (11) pouvant être déplacé par rapport à un véhicule (18) avec une colonne de portique (14) comprenant ou formant l'équipement porteur (12), ou **en ce que** l'installation de lavage de véhicule est un tunnel de lavage avec un équipement de convoyage pour le transport du véhicule (18), dans laquelle l'équipement porteur est positionné latéralement à côté du véhicule (18).

13. Installation de lavage de véhicule selon l'une des revendications précédentes, **caractérisée en ce qu'**un programme de nettoyage peut être exécuté avec l'installation de lavage de véhicule (10), où
- le véhicule (18) et le dispositif de pulvérisation (22) sont déplacés l'un par rapport à l'autre dans la direction longitudinale du véhicule (18),
- partant d'une première extrémité de véhicule (28) la première unité de pulvérisation (54) prend la première position et le premier liquide de nettoyage est pulvérisé par les buses de pulvérisation de la première unité de pulvérisation (54),
- dans la région entre la première extrémité de véhicule (28) et la seconde extrémité de véhicule (30), en particulier dans la région de milieu de véhicule, la première unité de pulvérisation (54) est transférée dans la seconde position via l'équipement de réglage (102),
- et le véhicule (18) et le dispositif de pulvérisation (22) sont déplacés l'un par rapport à l'autre dans la direction longitudinale du véhicule (18), jusqu'à ce que le dispositif de pulvérisation (22) soit agencé dans la région de la seconde extrémité de véhicule (30),
dans laquelle les buses de pulvérisation (90) de la seconde unité de pulvérisation (80) ne sont pas sollicitées avec le second liquide de nettoyage.

14. Installation de lavage de véhicule selon la revendication 13, **caractérisée en ce qu'**ensuite dans le cadre du programme de nettoyage
- partant de la seconde extrémité de véhicule (30) la seconde unité de pulvérisation (80) prend la première position et le second liquide de nettoyage est pulvérisé par les buses de pulvérisation (90) de la seconde unité de pulvérisation (80),
- dans la région entre la seconde extrémité de véhicule (30) et la première extrémité de véhicule (28), en particulier dans la région du milieu de véhicule, la seconde unité de pulvérisation (80) est transférée dans la seconde position via l'équipement de réglage (102),
- et le véhicule (18) et le dispositif de pulvérisation (22) sont déplacés l'un par rapport à l'autre dans la direction longitudinale du véhicule (18), jusqu'à ce que le dispositif de pulvérisation (22) soit agencé dans la région de la première extrémité de véhicule (28),
dans laquelle les buses de pulvérisation (58) de la première unité de pulvérisation (54) ne sont pas sollicitées avec le premier liquide de nettoyage.

15. Installation de lavage de véhicule selon l'une des revendications précédentes, **caractérisée en ce que** la direction de pulvérisation (76) d'un premier liquide de nettoyage des buses de pulvérisation (58) de la première unité de pulvérisation (54) et la direction de pulvérisation (98) d'un second liquide de nettoyage des buses de pulvérisation de la seconde unité de pulvérisation (80) présente dans la première position une composante de direction dans la direction de déplacement (142, 144) et présente dans la seconde position une composante de direction à l'encontre de la direction de déplacement (142, 144).
